# EUROPEAN PATENT APPLICATION

(11) **EP 3 375 278 A1**
(43) Date of publication of application: **19.09.2018**
(21) Application number: 17315002.0
(22) Date of filing: 13.03.2017
(51) Int. Cl.: A01G 17/00, A01G 3/04, A01G 17/02

(54) **MACHINE AND METHOD FOR EXTRACTING VINE BRANCHES**

(71) Applicant: Andelfinger, Didier, 68000 Colmar (FR); Dezé, Jean-Yves, 49400 Souzay-Champigny (FR)
(72) Inventor: Andelfinger, Didier, 68000 Colmar (FR); Dezé, Jean-Yves, 49400 Souzay-Champigny (FR)
(74) Representative: AMMANN PATENTANWÄLTE AG BERN

(57) **Abstract**

A machine (101) for pulling off plant branches (64, 65; 233), in particular vine branches, of tying wires (58-62) to which they cling by tendrils comprises comprises a combination of means capable to extract the branches (64, 65; 233) downwards. Preferably, the combination of means comprises a (resiliently pivoted) pressing member (119) and a pulling member (139) facing the pressing member (119). In operation, the pulling member (139) is moving so that its surface oriented towards the pressing member (119) moves downwards. Cut-off branches (64, 65; 233) are pressed on this surface by the pressing member (119) by a force sufficient that the branches (64, 65; 233) are dragged downwardly along and are forcibly detached from the tying wires (58-62) thereby.

## Description

The present invention relates to a viticulture machine for pulling off cut vine branches according to the preamble of claim 1. Furthermore, it relates to a method of pulling off cut vine branches according to the preamble of the first method claim.

Such a viticultural machine allows extracting (pulling) automatically vine branches growing on at least one arch (guyot system) on tying wires.

Before addressing the problem of the pulling of the vine branches, the various pruning types or tied vines shall explained more precisely. There are two pruning systems: the Guyot pruning and the "cordon de Royat" pruning.

With the cordon de Royat pruning, there is no problem for pulling, as the passage of a pre-pruner allows shredding 70 % of the vine branches and has a result very close to the final pruning in most cases.

The Guyot pruning consists in cutting off all vine branches except one or two long branches per vine plant, which are called guyot. The passage of a pre-pruner is limited to cutting the upper sections of the cut-off branches. The remaining parts of the vine branches must be individually removed from the tying system. These cut-off vine branches remain hanging on the tying wires by their tendrils, and high efforts are required to detach them. Therefore, the manual extraction of said vine branches is a tedious work, consumes much time and represents a major financial burden.

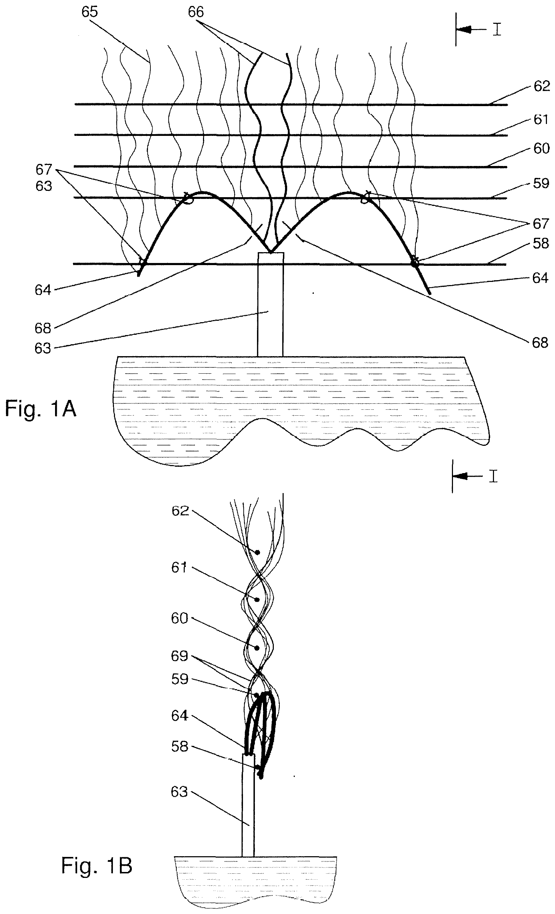

This work, carried out in principle every year at the beginning of spring, consists, in a first phase, in making cuts on every arch which are located on either side of the vine plant and from which grow the vine branches to be removed (prepruning), in order to keep only at least one fruit-bearing branch (on average two or three branches) in the central area, that is to say in the starting area of the arch (see the description of Figure 1 further below). In a second phase, said cut vine branches are pulled out of the tying to which they are attached by their tendrils. Due to its arduousness and to the time investment it requires, this mainly manual extraction has been tried to be automatized for many years.

Generally, the known pulling machines require a modification of the tying wires layout, possibly even of the posts, an adapted pruning to allow extracting the branches in good conditions, and pull the branches in two ways, either upwards or to the side, i.e. about horizontally.

WO 2009/022915 A1 discloses a machine fastened in an overhanging fashion at the end or a swiveling arm of a mast mounted on the front of the tractor. Extraction is performed by catching and pulling upwards the vine branches protruding from the tying wires, the vertically protruding sections of the branches being gripped by two pneumatic wheels driven and mounted on two horizontal axes arranged in such a way that said wheels are pressing against each other.

Disadvantages of this machine are:
- the forks, tendrils and other ramifications of the branches are clinging to the tying wires and make the extraction difficult. Upward pulling even directs the wires into the about V-shaped ramifications inhibiting an upward movement. Hence the ramifications need to be broken which requires significant forces. The more tying wires are present, the more the extraction is difficult.
- The traction required for removing the cut-off vine branches is high and the tying wires are subjected to high stress. It even happens that, with long rows, the wires slacken so much that they are caught by the extraction device, which leads to machine standstill and obligatory repair of the broken wire(s) before resuming work.
- The stress on the wires affects the posts, which may be loosened and even be pulled out of the ground, leading, too, to machine standstill in order to repair the tying.
- The positioning of the machine above the row represents a high weight offset with respect to the tractor, which increases the risks of an accident.

US 2010/0281770 A1 describes a machine whose extraction section is made of a an arrangement including a shaft provided with a reel in front of another shaft equipped with rotary knives and parallel to the first. Both shafts, having an adapted size, are mounted on bearings and arranged between two sheet metal plates forming a frame.

Using a swiveling mast mounted on the tractor, the operator positions the machine in an overhanging position in the direction of movement, so that the shafts are oriented parallel to the ground and perpendicular to the vine rows. He places the machine at the beginning of the vine row underneath the tying wires in order to lift them, with the cut-off branches attached to them, above the posts. The reel supplies a shredder located at its rear.

Constraints of this device are:
- The tying posts must imperatively be provided with hooks allowing the wires to exit freely in upward direction. Therefore, the tying infrastructure must be specifically adapted.
- After the passage of the machine, re-positioning the wires in the hooks takes much time.
- The shredder may cause numerous damages, in particular to the tensioners, to the wires and to their coating (galvanization).
- The positioning of the machine above the row represents a high weight offset with respect to the tractor bearing the machine, whereby the risk of an accident is increased.
- Due to the complexity of its design and manufacturing, this machine is very expensive and energy-consuming.

Even though a machine for extracting vine branches from the side according to WO-A-2012/175560 (designed, manufactured and distributed by the inventor of the present invention) allows avoiding many of the quite critical disadvantages mentioned above, it still shows some shortcomings - even though they are significantly less inconvenient:
- The arrangement of the tying wires is important, insofar as it is imperative to provide a free space of 50 cm in the area where the vine branches are to be extracted, in order to allow the vine branches to bend without breaking and therefore to be extracted. According to the planting system used in certain regions, this constraint is not or cannot be observed;
- The training wires must allow handling, in order to provide for a sufficiently wide space to allow the side drawing of the cut wood, although the use of spreaders is excluded.
- The Guyot pruning system, implying a so-called arch wire, makes the preparatory pruning of the vine even more tedious. The fact that the arched guyot must be totally detached from the arch wire requires particular attention by the operator.

The object of this invention is to realize a vine branch pulling machine and a method of pulling cut-off vine branches, particularly in a Guyot arch cultivating system, with less stress for the plant and the tying wires.

Preferably, the machine and method allows to pull off cut vine branches without any of the disadvantages described above.

This object is attained with the machine according to claim 1 and the method according to the first method claim. The further claims define preferred embodiments, methods and use of the machine.

It is the result of an in-depth analysis of the whole set of disadvantages and of their causes, which affect the known machines, although, in this situation, the person skilled in the art was deferred from reconsidering the conventional process consisting in extracting the cut-off wood upwards, in particular because of the concern and risk of damaging the fruit-bearing branches, as the destruction of these branches would mean no harvest. At the conclusion of a first step of this analysis, the inventor opened a new, yet still imperfect way (lateral pulling according to WO-A-2012/175560). The present invention implements the second step. De facto, the means defining it guarantee a preservation of the fruit-bearing branches and an optimal work quality, which properties have been confirmed in multiple uses and tests in most various conditions. Furthermore,the machine and method may reduce costs to a minimum and lower the energy demand.

The invention will be further explained by way of a preferred embodiment with reference to the Figures:
- Fig. 1: Schematic side view (1 A) and cross-section (cf. I - I in Fig. 1 A) of a vine plant with Guyot archs;
- Fig. 2: Total view on a branch pulling machine (BPM);
- Fig. 3: Rear view of a caching-extracting module (CEM)
- Fig. 4: Side view of a CEM
- Fig. 5: Total view of a BPM in operation;
- Fig. 6: Side view of the machine in operation;
- Fig. 7: Side view of the machine in operation, CEM and presser module disadjusted;
- Fig. 8: Cross-Section according to VIII - VIII in fig. 3, enlarged, for illustrating the shredder; and
- Fig. 9: Enlarged view an the multidirectional adjustment device.

Throughout the description and the claims the following definitions shall apply:
- downward: when the machine is in operation, in the direction of gravity, i.e. toward the surface of the earth;
- guyot: branch, in particular a cordon of a vine plant, selected to be pruned or to remain according to the Guyot method, a cordon-pruning training method;
- lower: in downward direction positioned
- upper: in upward direction positioned
- upward: direction opposite to downward.

The use of the machine according to the invention requires the application of a suitable preparation process of the Guyot pruning system which has three advantages (Figure 1). At the end of winter or the beginning of spring, it is imperative to tie the guyot 64 of year N without having them cross arch wire 59 against this wire by means of ties 67. The arch operation therefore becomes significantly easier and faster (first advantage). After the harvest, the preparatory pruning consists in the pruning 68 of the guyot 64 (archs according to the Guyot training method) of year N at only one location 68, releasing ties 67, and selecting branches 66 which will be the guyot of year N+1. This work requires little time, too (second advantage). The person skilled in the art will understand that a low pressure will be sufficient to press the guyots 64 of year N towards the extraction means of this invention (third advantage).

The only way to extract the cut guyots 64 with all their branches (shoots) 65 grown on them without being blocked by the tying wires is downwards. In fact, the example of the junction of vine branch 69 with guyot 64 shows that pulling upwards would be impossible because of the presence of tying wire 59. By contrast, pulling downwards presents no problem.

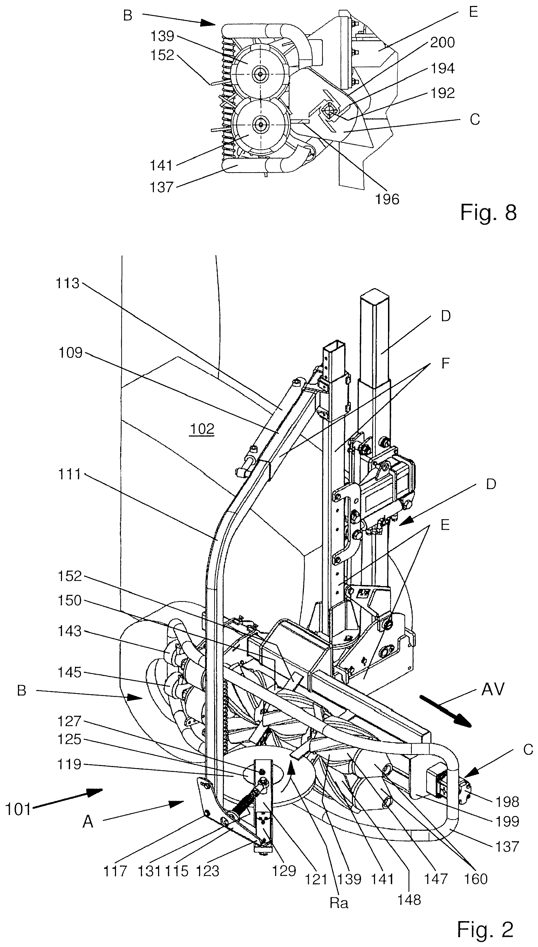

Figure 2 presents the machine 101 mounted to the right front side of a tractor 102 on a tool bar D. The direction of travel is symbolized by arrow AV. The Figure shows feeding module A, catching-extracting module B and shredder module C.

Feeding module A is mounted on a gantry F connected to frame E. Gantry F comprises a section 109 fastened to frame E and a sliding section 111 that allows to move module A away from or closer to module B or by means of a hydraulic ram 113 (conceivable: another type of actuator, e.g. pneumatic, electric motoric). An arm support 115 swiveling around axis 117 and allowing adjusting the inclination of feeding disk 119 with respect to extraction module B is arranged at the lower end of sliding section 111.

Feeding module A is connected to arm support 115 by an arm 121 rotating about an axis (hidden for protection purpose) in the end 123 of support 115. The feeding disk 119 placed between two mounting disks 125 and rotatable on an axis 127 is arranged at the end of rotary arm 121. The mounting disks have a diameter chosen such that the elastic feeding disk extends about horizontally, yet protrudes sufficiently over the rims of the mounting disks 125 so that the feedings disk is able to elastically deform and thereby passes in particular the branches not pruned.

The set including the feeding disk 119 and the disks 127 is put in rotation by a feeder motor 129 and by transmission means hidden in arm 121 (driving belt, chain, gearing or the like). Rotary arm 121 is arranged so as to allow it a movement against the influence of a return means 131 (e.g. an adjustable spring) to pass round the posts of the wire trellis and though to push the cut vine branches towards catching and extracting module B.

Feeding disk 119 is preferably smooth and made of a flexible material (preferably an elastic polymer like rubber, silicone) in order not to damage the fruit-bearing branches (guyots) remaining in place and not been pruned.

Guide 137 is connected to frame E by non-represented means that allow moving it away from or closer to catching-extracting module B.

The catching-extracting module B comprises an upper roller 139 and a lower roller 141 arranged below the former, each roller 139, 141 being driven individually by a hydraulic motor 143, 145 rotating in opposite directions. Each roller 139, 141 is made of several extraction cylinders 147, 148 made of rubber (or at least their surface is made of rubber, else they consist of steel, metal or the like).

A spacer 150, on the periphery of which flexible straps 152 are arranged, is located between each extraction cylinder 141, 143.

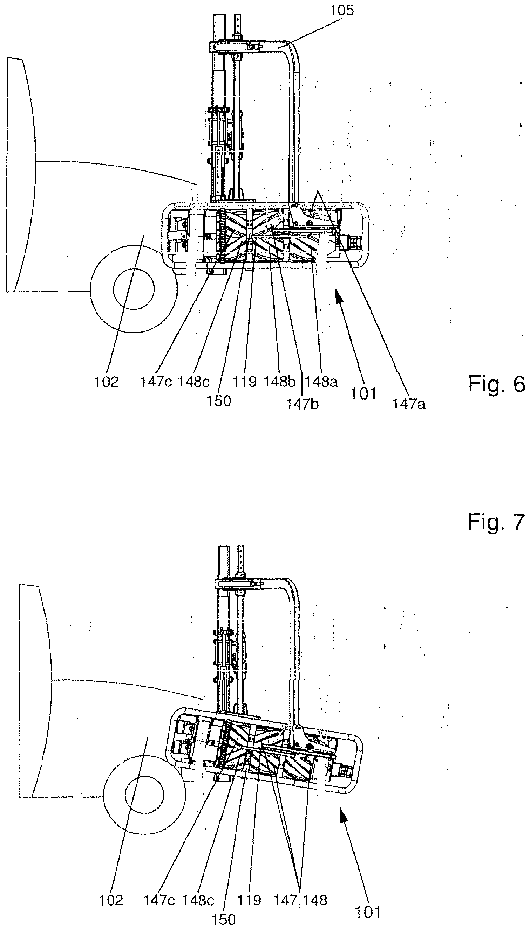

The periphery of each extraction cylinder 147, 148 is made of a resilient or rubber elastic material, in particular rubber, and is provided with twisted chevron-shaped ribs 154 which interpenetrate those of the other extraction cylinder 148, 147. These ribs 154 (widely spaced) have large-radius rounded external edges 156, 158. This conformation prevents on one hand the breaking or cutting of the vine branches caught thanks to the large radius of the edges 156, 158 and, on the other hand, the slipping back of the branches thanks to the interpenetration of ribs 154. Therefore, the feeding of shredding module C by catching-extracting module B is continuous and without jerks. As shown, the spiral shape of the rib 154 may be counter-clockwise or clockwise. In the example, the foremost two cylinder pairs 147a, 148a; 147b, 148b (cf. Fig. 6) show ribs of the same winding sense, whereas the rearmost cylinder pair 147c, 148c have a contrary winding sense, yielding a chevron appearance of the ribs 154 of middle and rearmost cylinders 147b, 148b resp. 147c, 148c.

A truncated cone-shaped dome 160 is arranged at the front end of rollers 139, 141 guiding the vine branches into the contact zone of rollers 139, 141.

Supporting box 162 of upper roller 139 is connected to frame E. Upper roller 139 is mounted on the front side of box 162 by means of a bearing 164 and driven in clockwise rotation Rh, seen in the Av direction of movement, by hydraulic motor 143 mounted on the rear side of box 162.

Lower supporting box 166 is connected to box 162 by articulation arm 168 with axes 170, 172 located near its extremities. Lower roller 141 is mounted on the front side of box 166 by means of a bearing 174. The lower roller 141 is put in counter-clockwise rotation Rah, seen in the direction of movement AV, by hydraulic motor 145 mounted on the rear side of box 166.

Opening and closing rollers 139, 141 takes place thanks to cylinder 176 with axis 178 mounted on box 162 and with axis 180 mounted on arm 168. Action of cylinder or ram 176 swivels arm 168 on axis 170. In closed position, adjustable thrust bar 182 (connected to arm 168 by axis 180 and to box 166 by axis 184) allows adjusting the space between the two rollers 139, 141 by a movement around axis 172, independently of the action of cylinder 176, according to the importance of the vegetation or the thickness of the vine branches.

Guiding means 137 is connected to frame E by means not shown (known *per se*) and has in its rear section, close to extraction cylinders 147, 148, a deflector rod 186 (a device for retaining and deflecting tying wires). Essentially, the deflector rod 186 is of a tube surrounded by a spiral 188 that extends over its whole height. The ends of the deflector rod 186 are connected to the upper resp. lower section of the guide 137.

Around each of rearmost cylinders 147, 148 and traversing their ribs 154 extends a circular groove 190 adapted in size to deflector rod 186, so that deflector rod 186 is partly housed in the ribs 154 of these rearmost of cylinders 147c, 148c, however without coming into contact with said cylinders 147c, 148c.

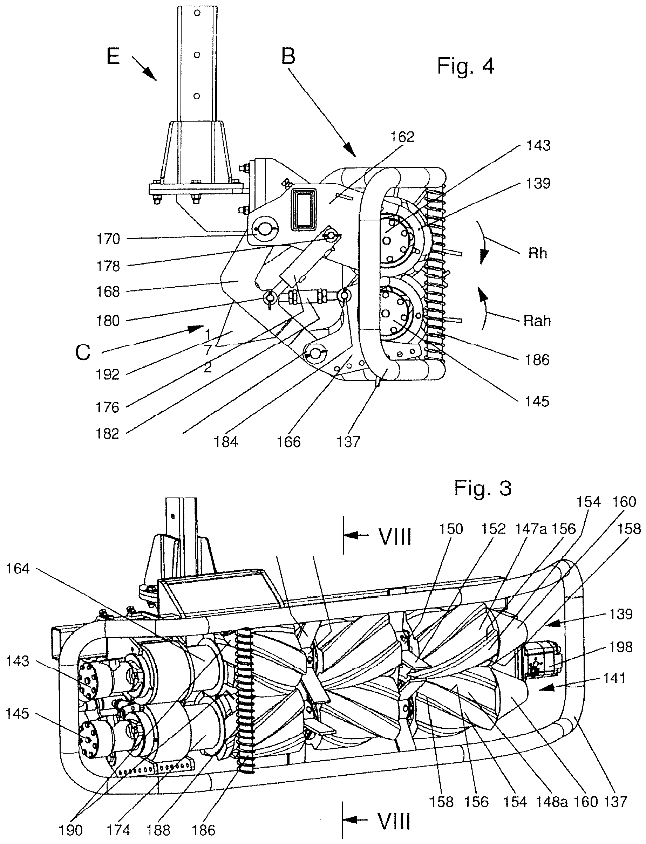

The shredding means C is attached to frame E, too. More exactly, it is mounted directly on the back of the catching-extracting module B and it includes a square shaft 192 on which four knives 194 are mounted. A counter knife 196 is mounted on frame E. These means (shaft 192, knives 194, counter knife 196) have a length equivalent to that of rollers 139, 141. Shaft 192 is driven in rotation by a hydraulic motor 198 (Fig. 3) mounted on front side 199 of the shredder C. To avoid projecting the shredded vine branches, shaft 192, knives 194 and counter knife 196 are arranged inside of a cover 200.

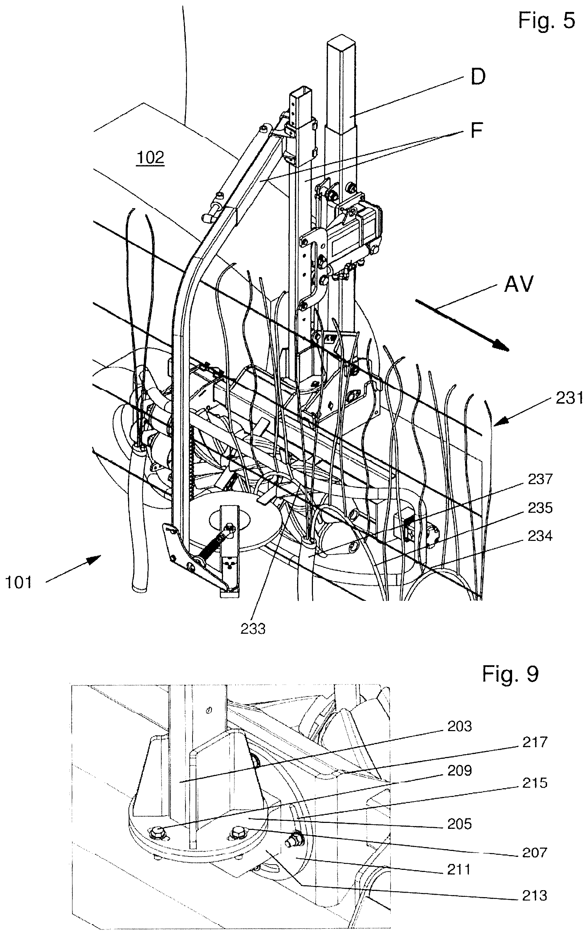

Figure 9 shows in detail the multidirectional adjusting device for the machine 101 in its entirety. The lower end of beam 203 is attached to a round plate 205 having oblong holes 207 wherein bolts 209 are housed. The rear round plate 211 (arranged orthogonally to round plate 205) of the connecting part 213 is equipped as well with oblong holes 215 and is fastened onto bracket 217 by bolts 219. Oblong holes 207 and 219 allow adjusting the machine in all positions with respect to the vine row. Fig. 6 shows the machine 101 in a first adjusted situation, whilst in Fig. 7, the machine is shown in another adjusted situation.

The machine for pulling out cut plant branches is designed for pulling the branches downwards. This operation is performed as follows, illustrated for the preferred applications field of vine yards:

The gantry F spanning over a vine row 231 holds on one side of the vine row the feeding module A and on the other side of the vine row, the catching-extracting and shredding module B. The whole arrangement is mounted on the front of an agricultural tractor 102 and carried by a tool bar (boom) D of the agricultural tractor.

The feeding module A mounted in the lower right section (cf. Fig. 5, seen in direction Av in which the tractor moves) of the gantry F bears the feeding disk 119 driven in rotation. The flexible outer circumference of the disk 119 pushes the cut cordons or vine branches 233 perpendicularly towards the catching extractor module B. The feeding disk is mounted on an oscillating arm 121 controlled by an adjustable spring 131 in order to adapt the pressure of said feeding disk according to vine branch density. The oscillating arm 121 also allows the feeding disk 119 to go round the posts. The oscillating arm 121 is mounted on an adjustable support (115, 117) that allows adapting the angle between the feeding disk and the longitudinal axis extraction cylinders 147, 148. Preferably, the angle is close to 0°, or at most 10 ° in either direction, so that the periphery of the disk moves parallel to the longitudinal axis of the extraction cylinders 147, 148.

The upper section of gantry F is equipped with a hydraulic ram 113 to allow the operator to adjust the distance between the feeding means A and the catching-extracting means B according to the thickness of the vegetation or for transport.

Mounted on the lower left section of the gantry F, the catching-extracting module B is located in front of the feeding module A, so that a minimal distance between the periphery of the feeding disk 119 and the intersection point of the lower and upper rollers can be adjusted, preferably about 30 mm.

In a first phase, the supporting spacers 150 on which four flexible straps 152 protrude from the diameter of the cylinders 147, 148 (preferably about 10 cm) are provided, have the role of gripping the vine branches 233 previously pushed by the feeding disk 119 toward the catching-extracting module B, in order to introduce them progressively and without brutality between the extraction tubes. At the rated rotational speed of the upper and lower rollers, the repeated passage of the straps 152 on every vine branch prevents any risk of missing to catch branches while preserving the tying wires 234, the fruit-bearing branches 235 and the vine plants 237.

Once the cut vine branches 233 have been gripped by the flexible straps 152, they are caught by the extracting cylinders 147, 148. Their chevron ribs 154 described above facilitate pinching them in order to forward them to the shredding module C, which completes the work by fragmenting them before letting them fall on the ground. The very high rotary speed of the shredder shaft (of the order of 3,000 RPM) prevents jamming and reduces the driving torque. Figure 5 shows the result of the work after the passage of the machine as well.

On the basis of the preceding description of a preferred embodiment, the one skilled in the art is enabled to conceive alternations and modifications without leaving the scope of the invention which is defined by the attached claims. Such modifications and alternations may be:
- The pressing disk is a disk provided with a resiliently held rim. The rim may be held by a spring arrangement or rubber-elastic means centred with respect to the axis of rotation in a resilient manner. F. i. the spring arrangement comprises 3 or more radially extending spring, possibly in combination with damping elements.
- The surface of the pulling rollers is made of a rubber-elastic material, in particular a polymer and more preferably rubber; however, metal or steel is not excluded, although a polymer in general provides a more elevated friction, i.e. gripping effect, to the branches in support of the dragging of the branches, whereas a metal surface will need appropriated structuring of the surface for creating a positive engagement with the branches or sufficient friction.
- The surface of the rollers may have any structure as far as the required friction and thereby dragging force on the branches is secured. It may have a rough surface, structured surface (axial ribs, angled ribs, elevation (nibs), profiles like those of tires. In the extreme, with surfaces having sufficient frictional grip toward branches, the surface may even be about unstructured or without a profile.
- Regarding the profile of the rollers according to the preferred example, the height of the ribs may be 1 cm to 5 cm and preferably about 3 cm (centimetre).
- Although it may be contemplated that only one of a pair of pulling rollers are motor-driven and the other being indirectly put into rotation, such an arrangement is prone to increases wear and tear of the surface of the rollers due to intermittent and discontinuous of the free-running roller. Therefore, synchronous driving both rollers is preferred so that slippage between the surfaces of the roller in the contact zone is avoided.
- Even in the "contact surface" a gap exists between the surfaces of the pulling rollers. The gap is however small enough so that even tiny branches are gripped, e.g. in the range 1 to 2 mm. With a distinct profile bending the branches whereby a positive engagement is obtained, the gap may be chosen towards the upper limit. The lower limit is given by the requirement that the branches shall not be divided into pieces by the pulling rollers. Still to be noted that the rollers are preferably held in position by a resilient mechanism so that thicker branches may increase the gap, preferably with at the same time increased pressure on the branches, so that they are pulled of the trellis wires (tying wires) without being ripped apart.

### Reference Numerals/Letters List

### Letters

- AV: direction of travel
- A: feeding means
- B: catching-extracting means
- C: shredding means
- D: SMP 30 tool bar
- E: machine frame
- F: gantry of the feeding module
- Ra: direction of rotation of the feeding disk
- Rh: clockwise rotation of upper roller 139
- Rah: counter-clockwise rotation of lower roller 141

### Figures

- 58: head wires or binding wire
- 59: arch wire
- 60: tying wire 1
- 61: tying wire 2
- 62: tying wire 3
- 63: vine plant
- 64: cordon (fruit-bearing branch) year N
- 65: vine branch
- 66: cordon (fruit-bearing branch) year N+1
- 67: tie
- 68: cut of the cordon year N for the preparatory pruning
- 69: blocking vine branch
- 109: fixed section of the gantry
- 111: sliding section of the gantry
- 113: gantry spreading cylinder
- 115: support of oscillating arm 121
- 117: axis of support of oscillating arm 121
- 119: feeding disk
- 121: oscillating arm of the feeder
- 125: steel disk carrying the flexible disk
- 127: feeding disk axis
- 129: feeding disk motor
- 131: return spring of the swiveling feeder support in fig. 2
- 134: upper roller hydraulic motor
- 137: guide
- 139: upper roller in fig. 3
- 141: lower roller
- 145: lower roller hydraulic motor
- 147: extraction cylinder
- 148: rear lower extraction cylinder with machining
- 148: rear upper extraction cylinder with machining
- 150: flexible strap carrying spacer
- 152: gripping strap
- 154: ribs (arranged as twisted chevrons)
- 156: rounded rib angle
- 158: rounded rib angle
- 160: cone-shaped tubes
- 162: upper roller supporting box
- 164: upper roller bearing
- 166: lower roller supporting box
- 168: lower roller articulation arm
- 170: axis of articulation arm 19
- 172: axis of adjustable thrust bar 182
- 174: lower roller bearing
- 176: roller closing/spreading cylinder
- 178: cylinder axis on box 162
- 180: common axis of adjustable thrust bar 182 and cylinder 176
- 182: thrust bar: roller spread adjusting bar
- 184: axis of adjusting bar on arm 166
- 186: tying wires retaining device
- 188: spiral on tying wires retaining tube
- 190: groove of cylinders 147c, 148c
- 192: shredder shaft
- 194: shredder knife
- 196: shredder counter knife
- 198: motor
- 199: shredder front side
- 200: shredder protective cover
- 203: vertical frame beam
- 205: adjustable frame beam plate
- 207: oblong holes of the adjustable frame bracket plate
- 209: bolts in oblong holes 207
- 213: connecting part
- 215: oblong holes of the connecting part
- 217: supporting bracket
- 219: bolts of the supporting bracket 217 and rear round plate
- 233: vine branches to be evacuated
- 235: fruit-bearing branches to be preserved
- 237: vine plant

## Claims

1. A machine (101) for automatically pulling out the cut-off plant branches (64, 65; 233) of plants (63; 237), in particular vine plants, substantially arranged in a row (231) extending along at least one tying wire (58-62), the branches clinging by tendrils on the tying wire, **characterized in that** the machine comprises a combination of means capable to extract the cut-off plant branches downwards

2. The machine according to claim 1, **characterized in that** the combination of means comprises a pressing device (119), preferably being a disk rotatable, preferably by a motor (129), on a downwardly oriented axis (127), and a pulling device (139), that the pressing device is arranged to press the branches by a pressing force on a downwardly moving surface of the pulling device (139), and that the pressing device and the pulling device are positioned on opposite sides with respect to the plant row, so that the cut-off branches are dragged along by the downwards moving surface.

3. A machine (101) according to one of claims 2, **characterized in that** the pressing device (119) at least peripherally, preferably almost in its entirety, consists of a resilient material so that it is reversibly deformable by objects (66) of increased resistance against being pressed against the pulling device (139, 141) in comparison with cut-off plant branches, in order that the objects of increased resistance are passed by the deformed pressing device without the objects being brought in effective contact with the pulling device.

4. The machine (101) according to one of claims 2 to 3, **characterized in that** it comprises an essentially U-shaped gantry (F), at the ends of the legs of which the pressing device (119) respectively the pulling device (139, 141) are arranged.

5. The machine (101) according to one of claims 2 to 4, **characterized in that** the pressing device (119) is attached to a horizontally movable support member (121) which is in operable connection with a resilient pressing force member (131) of adjustable resilient action, preferably an adjustable spring member in order to create an adjustable and resilient pressing force.

6. The machine (101) according to one of claims 2 to 5, **characterized in that** the pulling device (139, 141) comprises at least one upper motor driven roller (139) rotatable on a substantially horizontal axis so that its surface opposed to the pressing device (119) is movable in a downward oriented direction.

7. The machine (101) according to claim 6, **characterized in that** a lower roller (141) is arranged generally below the upper roller (139) and contacts the upper roller or is arranged as close to the first roller by an adjustment mechanism (168 - 182) for adjusting the distance between the first and second roller, so that a slit between the rollers of a width of at most 1 cm, preferably at most 5 mm, more preferably at most 2 mm, and most preferably at most 1 mm (millimetre) wide can be obtained and that branches moved downwards by the first roller can be gripped between upper and lower roller and dragged off of the tying wire.

8. The machine (101) according to one of claims 2 to 7, **characterized in that** the upper and lower roller (139, 141) are two coaxially arranged generally cylindrical rollers, that the surfaces of the rollers are at most 1 cm, preferably at most 5 mm, more preferably at most 2 mm, and most preferably at most 1 mm (millimetre) distant, preferably touching each other or engaging with each other, along a contact line in axial direction, that the contact line of the rollers being positioned opposite the pressing device (119), that at least one of the rollers, preferably both rollers, is motor driven, and that the upper roller is rotated in a sense that the surface of the upper roller facing the pressing device is moving substantially downwards.

9. The machine (101) according to claim 8, **characterized in that** the rollers (139, 141) are provided with at least one of the following in order to avoid slipping back of branches gripped by the rollers.:
- a surface of a pattern of axially or spirally extending ribs (154) and interspersed depressions which engage in the contact line, preferably the ribs (154) being about rectangular or trapezoid with the shorter parallel side facing the other roller in cross-section, the elevated edges being round to reduce friction and risk of breaking branches (64, 69; 233) gripped;
- a rough surface;
- a surface covered with irregular or regulary dispersed elevation;
- a surface of rubber, polymer, foamed polymer.

10. The machine (101) according to one of claims 8 to 9, **characterized in that** at least the upper roller (139), preferably both rollers (139, 141), comprise at least two axially adjacent sections (147, 148), that between at least two of the sections, preferably between each two sections, a spacer (150) is arranged, that the circumference of the spacer is provided with flexible straps-shaped members (152) which protrude over the surface of the roller sections so that branches (64, 65; 233) of a plant, in particular merely horizontally oriented branches (64), can be catched and dragged towards the pulling device by the flexible strap-shaped members.

11. The machine (101) according to one of claims 1 to 10, **characterized in that** in the direction of movement of branches behind the combination of means (139, 141) for extracting branches, a shredder device is arranged, the shredder device comprising a rotating device (192) supporting at least one radially extending shredder knife (194), preferably at least a pair of opposing knifes in order to suppress imbalance while rotation, and that at least one counter-knife (196) is arranged opposing the shredder knives that the shredder knives and the counter-knife are capable to cut objects moved into the shredder device by a cutting cooperation of shredder knives and counter-knife.

12. Method of pulling cut-off branches (64, 65; 233) of a plant, preferably a vine plant (63; 237), the branches clinging to a system of tying wires, the clinging preferably being effected to at least a significant part by tendrils, **characterized in that** the branches are pulled off of the wires in downward direction by a pulling device (139).

13. Method according to claim 12, **characterized in that** the pulling device (139) comprises a downwardly moving surface against which the branches (64, 65; 233) are pressed in order to be pulled downwards.

14. Method according to claim 12 or 13, **characterized in that** the branches (64, 65; 233) are pressed against the pulling device (139) by a pressing device (119) resiliently moved and pressed against the pulling device.

15. Use of the machine according to one of claims 1 to 11 for pulling cut-off branches (64, 65; 233) of a plant (63; 237), in particular a vine plant (63, 237), attached by tendrils to tying wires (58-62) in a direction diverting by an angle significantly deviating from horizontal in downward direction, preferably deviating by at least 45°, and more preferably in about downward direction.
